# FASCICULE DE BREVET EUROPEEN

(11) **EP 3 039 827 B1**
(45) Date de publication et mention de la délivrance du brevet: **21.06.2017**
(21) Numéro de dépôt: 14752903.6
(22) Date de dépôt: 16.07.2014
(51) Int. Cl.: H04L 12/403, H04L 12/46, H04L 12/40

(54) **PROCÉDÉ ET DISPOSITIF DE CONTRÔLE DE LA TRANSMISSION DE TRAMES DE RÉPONSE, ISSUES D'ORGANES ESCLAVES APPARTENANT À UN RÉSEAU LIN, À UN RÉSEAU D'UN AUTRE TYPE**
VERFAHREN UND VORRICHTUNG ZUR STEUERUNG DER ÜBERTRAGUNG VON REAKTIONSRAHMEN AUS SLAVE-VORRICHTUNGEN IN EINEM LIN-NETZWERK GEGENÜBER EINER ANDEREN ART VON NETZWERK
METHOD AND DEVICE FOR CONTROLLING THE TRANSMISSION OF RESPONSE FRAMES, ORIGINATING FROM SLAVE DEVICES BELONGING TO A LIN NETWORK, TO ANOTHER TYPE OF NETWORK

(30) Priorité: 30.08.2013 FR 1358319
(43) Date de publication de la demande: 06.07.2016
(73) Titulaire: Peugeot Citroën Automobiles SA, 78140 Vélizy Villacoublay (FR)
(72) Inventeur: BOISSERIE, Antony, F-91320 Wissous (FR); POUSSARD, Julien, F-75017 Paris (FR)
(74) Mandataire: Jeannin, Laurent Jean-Pierre
(86) Numéro de dépôt international: PCT/FR2014/051828
(87) Numéro de publication internationale: WO 2015/028731

(56) Documents cités:
- EP-A1- 1 465 370
- US-A1- 2009 225 766
- US-A1- 2009 268 744
- US-A1- 2013 073 764

## Description

L'invention concerne les groupes de réseaux de communication multiplexés, présentant des types différents et interconnectés via un organe de gestion assurant une fonction de passerelle, et plus précisément les groupes comprenant un réseau d'interconnexion locale (ou LIN (pour « Local Interconnect Network »)) et au moins un second réseau ne pouvant recevoir des trames résultant d'une segmentation d'un message de réponse que lorsqu'elles sont séparées par une durée minimale.

Comme le sait l'homme de l'art, l'organe de gestion, qui constitue un organe maître au sein d'un premier réseau LIN et qui assure la fonction de passerelle entre ce premier réseau LIN et un second réseau du type précité (par exemple CAN), est notamment chargé, d'une part, de transmettre des requêtes de diagnostic produites par au moins un outil de diagnostic du second réseau vers au moins un organe esclave du premier réseau (LIN), et, d'autre part, de transmettre des messages de réponse de diagnostic produites par au moins un organe esclave du premier réseau (LIN) vers l'outil de diagnostic requérant.

Pour transmettre les requêtes de diagnostic, l'organe de gestion, qui constitue un organe maître au sein du premier réseau, commute d'une première table de programmation (définissant les tranches temporelles (ou « slots ») de transmission de messages fonctionnels généraux vers une seconde table de programmation (définissant les organes esclaves concernés par les requêtes de diagnostic issues du second réseau et les tranches temporelles d'émission qui leur ont été respectivement attribuées). Chaque requête de diagnostic reçue par l'organe de gestion est transmise dans le premier réseau sous la forme d'une trame de requête maître (ou en anglais « Master Request Frame » (imposée par le standard) et émise dans une tranche temporelle de type dit « sporadique ».

Il est rappelé qu'une tranche temporelle sporadique est une tranche temporelle dans laquelle une trame peut être émise par l'organe maître uniquement suite à la mise à jour d'au moins l'une de ses données (ici la réception d'une requête de diagnostic).

Pour obtenir d'un organe esclave un message de réponse de diagnostic, l'organe de gestion interroge cet organe esclave après avoir commuté de sa première table de programmation vers sa seconde table de programmation (définissant les tranches temporelles de transmission des messages de réponse de diagnostic attribuées aux différents organes esclaves). L'organe esclave interrogé par l'organe de gestion transmet à ce dernier son message de réponse de diagnostic au moyen d'une trame de réponse esclave (ou en anglais « Slave Response Frame ») imposée par le standard et de type dit « événementiel ».

Il est rappelé qu'une trame de type événementiel est une trame transmise par un organe esclave uniquement en cas de mise à jour d'au moins l'une de ses données (ici une réponse de diagnostic disponible).

L'échange de messages (requêtes de diagnostic et messages de réponse de diagnostic) au niveau d'un organe de gestion (constituant une passerelle de messages) présente des inconvénients. En effet, elle nécessite la mise en oeuvre d'une mémoire tampon (ou « buffer ») présentant une taille de stockage importante pour stocker la requête de diagnostic reçue du second réseau et le message de réponse de diagnostic reçue du premier réseau, et des temps d'attente importants du fait de l'existence d'un temps de réception de la requête de diagnostic et d'un temps de réception du message de réponse de diagnostic.

Au lieu d'échanger des messages, on pourrait échanger des trames résultant d'une segmentation des messages. Mais cette technique n'a jusqu'à présent pas été mise en oeuvre dans les groupes de réseaux interconnectés comportant un premier réseau LIN, car elle ne permet pas de respecter certaines contraintes temporelles au sein du second réseau. En effet, un second réseau ne peut recevoir des trames résultant d'une segmentation d'un message de réponse que lorsque ces trames sont séparées les unes des autres d'une durée minimale. Or, un organe de gestion constituant une passerelle de trames est habituellement agencé de manière à transmettre immédiatement dans le premier réseau une trame qu'il vient de recevoir du second réseau.

L'invention a donc notamment pour but de permettre le fonctionnement d'un organe de gestion en tant que passerelle de trames grâce à l'utilisation de nouvelles trames dites conditionnelles.

Elle propose notamment à cet effet un procédé, dédié au contrôle de la transmission de messages de réponse, générés par au moins un organe esclave appartenant à un premier réseau de communication multiplexé, de type LIN et géré par un organe de gestion, à un second réseau de communication multiplexé et ne pouvant recevoir des trames résultant d'une segmentation d'un message de réponse que lorsqu'elles sont séparées par une durée minimale.

Ce procédé se caractérise par le fait qu'il comprend une étape dans laquelle, chaque fois qu'un organe esclave doit transmettre un segment d'un message de réponse, l'organe de gestion lui transmet à un instant choisi un entête d'une trame dite conditionnelle pour qu'il la complète avec ce segment et lui transmette une trame conditionnelle complétée pendant une tranche temporelle qui lui est dédiée et qui permet de respecter la durée minimale, puis l'organe de gestion transmet immédiatement au second réseau de communication la trame conditionnelle complétée, et ainsi de suite jusqu'à ce que tous les segments du message de réponse aient été transmis au second réseau de communication dans des trames conditionnelles complétées successives.

L'organe de gestion OG constitue ainsi une passerelle de trames qui n'a pas besoin d'utiliser une mémoire tampon (ou buffer) et qui peut cadencer la réception d'un message de réponse depuis le premier réseau par rapport à l'émission sur le second réseau.

Par exemple, l'organe de gestion peut envoyer à l'organe esclave concerné un nouvel entête de trame conditionnelle après qu'il ait reçu du second réseau de communication une notification signalant l'émission de la trame conditionnelle complétée précédente.

L'invention propose également un dispositif de contrôle, destiné à contrôler la transmission de messages de réponse, générés par au moins un organe esclave appartenant à un premier réseau de communication multiplexé, de type LIN et géré par un organe de gestion, à un second réseau de communication multiplexé et ne pouvant recevoir des trames résultant d'une segmentation d'un message de réponse que lorsqu'elles sont séparées par une durée minimale.

Ce dispositif se caractérise par le fait qu'il est agencé, chaque fois qu'un organe esclave doit transmettre un segment d'un message de réponse, pour déclencher la transmission à un instant choisi par l'organe de gestion à cet organe esclave d'un entête d'une trame dite conditionnelle pour qu'il la complète avec ce segment et lui transmette une trame conditionnelle complétée pendant une tranche temporelle qui lui est dédiée et qui permet de respecter la durée minimale, puis pour déclencher la transmission immédiate par l'organe de gestion au second réseau de communication de la trame conditionnelle complétée, et ainsi de suite jusqu'à ce que tous les segments du message de réponse aient été transmis au second réseau de communication dans des trames conditionnelles complétées successives.

Par exemple, ce dispositif peut être également agencé pour déclencher l'envoi par l'organe de gestion à l'organe esclave d'un nouvel entête de trame conditionnelle en cas de réception par l'organe de gestion du second réseau de communication d'une notification signalant l'émission de la trame conditionnelle complétée précédente.

L'invention propose également un organe, d'une part, propre à gérer un premier réseau de communication multiplexé, de type LIN et auquel est connecté au moins un organe esclave, et à être connecté à un second réseau de communication multiplexé et ne pouvant recevoir des trames résultant d'une segmentation d'un message de réponse que lorsqu'elles sont séparées par une durée minimale, et, d'autre part, comprenant un dispositif de contrôle du type de celui présenté ci-avant.

L'invention propose également un véhicule, éventuellement de type automobile et comprenant un premier réseau de communication multiplexé, de type LIN et auquel est connecté au moins un organe esclave, un second réseau de communication multiplexé et ne pouvant recevoir des trames résultant d'une segmentation d'un message de réponse que lorsqu'elles sont séparées par une durée minimale, et un organe de gestion du type de celui présenté ci-avant et propre à gérer le premier réseau de communication et à être connecté au second réseau de communication.

L'invention est particulièrement bien adaptée, bien que non limitativement, au cas où le second réseau de communication est de type CAN.

D'autres caractéristiques et avantages de l'invention apparaîtront à l'examen de la description détaillée ci-après, et des dessins annexés, sur lesquels :

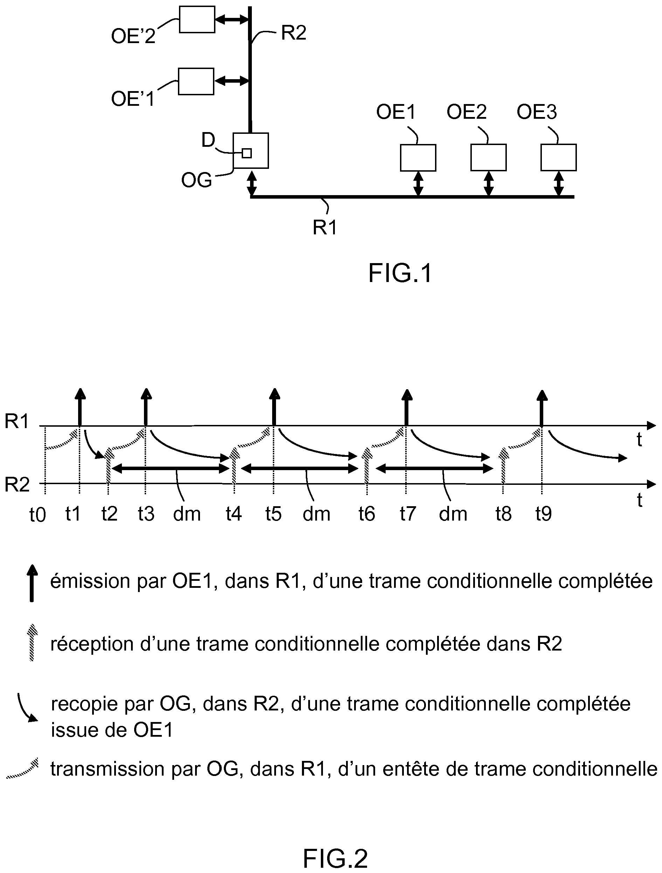

- la figure 1 illustre schématiquement et fonctionnellement un exemple d'organe de gestion équipé d'un exemple de réalisation d'un dispositif de contrôle selon l'invention, chargé de gérer un premier réseau de communication multiplexé et de type LIN et assurant une fonction de passerelle vers un second réseau de communication multiplexé et de type CAN, et
- la figure 2 illustre schématiquement deux exemples de chronogrammes matérialisant des instants d'émission, de réception ou de recopie dans les premier et second réseaux de communication multiplexés de trames conditionnelles complétées ou d'entêtes de trames conditionnelles à compléter.

L'invention a notamment pour but de proposer un procédé et un dispositif associé permettant de contrôler la transmission de messages de réponse, générés par au moins un organe esclave OEj appartenant à un premier réseau de communication R1 multiplexé, de type réseau d'interconnexion locale (ou LIN) et géré par un organe de gestion OG, à un second réseau de communication R2 multiplexé et ne pouvant recevoir des trames résultant d'une segmentation d'un message de réponse que lorsqu'elles sont séparées par une durée minimale dm.

Dans ce qui suit, on considère, à titre d'exemple non limitatif, que les premier R1 et second R2 réseaux de communication multiplexés sont embarqués dans un véhicule automobile, comme par exemple une voiture. Mais l'invention n'est pas limitée à cette application. Elle concerne en effet tout système, installation ou appareil pouvant comprendre au moins deux réseaux de communication multiplexés (dont un de type LIN) et interconnectés via un organe de gestion OG. Elle concerne donc notamment les véhicules, qu'ils soient de type terrestre, maritime (ou fluvial), ou aérien, les installations, éventuellement de type industriel, et les bâtiments.

Par ailleurs, on considère dans ce qui suit, à titre d'exemple non limitatif, que le second réseau de communication R2 est de type CAN (« Controller Area Network »). Mais l'invention n'est pas limitée à ce type de second réseau de communication multiplexé. D'une manière générale, l'invention concerne tout second réseau de communication multiplexé et ne pouvant recevoir des trames résultant d'une segmentation d'un message de réponse que lorsqu'elles sont séparées par une durée minimale dm qui est imposée par la norme concernant sa couche de segmentation.

On a schématiquement représenté sur la figure 1 un exemple non limitatif de premier R1 et second R2 réseaux (de communication multiplexés) interconnectés via un organe (ou noeud) de gestion (ou organe maître) OG.

Le premier réseau R1 (de type LIN) comprend un bus auquel sont connectés l'organe de gestion OG et au moins un organe (ou noeud) esclave OEj. Dans l'exemple non limitatif illustré, trois organes (ou noeuds) esclaves OE1 à OE3 (j = 1 à 3) sont connectés au bus du premier réseau R1. Mais le nombre d'organes esclaves OEj peut prendre n'importe quelle valeur supérieure ou égale à un (1).

Le second réseau R2 (ici de type CAN) comprend un bus auquel est connecté l'organe de gestion OG et au moins un organe (ou noeud) OE'k. Dans l'exemple non limitatif illustré, deux organes (ou noeuds) OE'1 et OE'2 (k = 1 ou 2) sont connectés au bus du second réseau R2. Mais le nombre d'organes OEk peut prendre n'importe quelle valeur supérieure ou égale à un (1).

L'organe de gestion OG et les organes OEj et OE'k peuvent être de tout type. Par exemple, dans le cas d'une voiture il peut s'agir d'éléments, d'équipements ou d'organes du système de climatisation ou du système de contrôle des translations des vitres ou encore du système de verrouillage des portes.

Le procédé de contrôle, selon l'invention, est mis en oeuvre au niveau de l'organe de gestion OG au moyen d'un dispositif de contrôle D. Comme illustré non limitativement, ce dispositif de contrôle D peut faire partie intégrante de l'organe de gestion OG. Mais dans une variante il pourrait n'être que couplé à l'organe de gestion OG. Par conséquent, un dispositif de contrôle D peut être réalisé sous la forme de modules logiciels (ou informatiques ou « software »), ou bien de circuits électroniques (ou « hardware »), ou encore d'une combinaison de circuits électroniques et de modules logiciels. On notera que le dispositif de contrôle D peut être considéré comme un automate.

Le procédé (de contrôle), selon l'invention, comprend une étape dans laquelle, chaque fois qu'un organe esclave OEj doit transmettre un segment d'un message de réponse, l'organe de gestion OG transmet à un instant choisi à cet organe esclave OEj un entête d'une trame dite conditionnelle pour qu'il la complète avec ce segment et lui transmette une trame conditionnelle complétée pendant une tranche temporelle (ou « slot ») qui lui est dédiée et qui permet de respecter la durée minimale dm. Le déclenchement de cette transmission est requis par le dispositif de contrôle D.

On entend ici par « trame conditionnelle » une trame dont l'émission est déclenchée par l'occurrence d'un événement interne dans l'organe de gestion OG, à savoir soit l'observation du fait que va bientôt arriver la tranche temporelle qui est dédiée à un organe esclave OEj pour commencer à transmettre un segment d'une réponse à une requête venant juste d'être reçue, soit la réception en provenance du second réseau R2 d'une notification signalant l'émission de la trame conditionnelle complétée précédente.

On notera qu'un organe esclave OEj doit transmettre un message de réponse consécutivement à la transmission par un organe OE'k du second réseau R2 d'une requête réclamant une réponse d'au moins un organe esclave OEj du premier réseau R1. Cette requête est donc préalablement reçue par l'organe de gestion OG, puis recopiée par ce dernier (OG) dans le premier réseau R1 (au format de ce dernier (R1)) à destination d'au moins un organe esclave OEj désigné par une table de programmation définissant les organes esclaves OEj concernés par les requêtes issues du second réseau R2 et les tranches temporelles qui leurs sont respectivement associées.

Par exemple, chaque requête ici considérée est issue d'un outil de diagnostic OE'1 du second réseau R2, et donc chaque message émis de façon segmentée par un organe esclave OEj du premier réseau R1 est une réponse de diagnostic.

On notera également que l'organe de gestion OG dispose d'une autre table de programmation définissant les tranches temporelles de transmission des messages de réponse (ici de diagnostic) attribuées aux différents organes esclaves OEj.

On notera également que lorsque le dispositif de contrôle D de l'organe de gestion OG s'aperçoit que la prochaine tranche temporelle qui a été attribuée à un organe esclave OEj interrogé ne peut pas être utilisée, parce que le second réseau R2 n'est pas disponible (c'est-à-dire lorsqu'un organe OE'k émet une trame) et/ou qu'elle ne permet pas de respecter la durée minimale dm, il retarde la transmission à cet organe esclave OEj de l'entête de trame conditionnelle à compléter jusqu'à une prochaine tranche temporelle qui lui a été attribuée et qui permet de respecter la durée minimale dm (et la disponibilité du second réseau R2).

Lorsqu'un organe esclave OEj a complété l'entête d'une trame conditionnelle avec un segment de son message de réponse requis, il transmet immédiatement cette trame conditionnelle complétée sur le premier réseau R1 dans la tranche temporelle qui lui a été attribuée et qui permet de respecter la durée minimale dm (et la disponibilité du second réseau R2).

Par exemple, les trames conditionnelles peuvent être des « Slave Response Frames » modifiées.

L'étape du procédé se poursuit ensuite par la transmission immédiate au second réseau R2, après recopie par l'organe de gestion OG, de la trame conditionnelle complétée (issue de l'organe esclave OEj interrogé).

Le contrôle du retard de la transmission d'entête(s) de trame conditionnelle à compléter à cet organe esclave OEj et la transmission immédiate au second réseau R2 de trame(s) conditionnelle(s) complétée(s) issue(s) de cet organe esclave OEj se succèdent ainsi jusqu'à ce que tous les segments du message de réponse de cet organe esclave OEj aient été transmis au second réseau R2 dans des trames conditionnelles complétées successives.

Grâce à ce mode de fonctionnement, l'organe de gestion OG constitue une passerelle de trames propre à transmettre immédiatement dans le second réseau R2 une trame conditionnelle complétée, reçue d'un organe esclave OEj après avoir éventuellement retardée son émission pour satisfaire à la contrainte liée à la durée minimale dm, et après l'avoir recopiée au format du second réseau R2.

Cela permet avantageusement de ne pas utiliser de mémoire tampon (ou buffer) dans l'organe de gestion OG. Cela permet également à ce dernier (OG) de cadencer la réception d'un message de réponse depuis le premier réseau R1 par rapport à l'émission sur le second réseau R2.

De préférence, l'organe de gestion OG envoie un nouvel entête de trame conditionnelle à un organe esclave OEj, qui a commencé à transmettre au moins un segment de son message de réponse, après qu'il ait reçu du second réseau R2 une notification signalant l'émission de la trame conditionnelle complétée précédente.

On a schématiquement illustré sur la figure 2 deux exemples de chronogrammes permettant de faciliter la compréhension de l'invention. Le premier chronogramme (le plus haut) concerne les actions réalisées dans le premier réseau R1, tandis que le second chronogramme (le plus bas) concerne les actions réalisées dans le second réseau R2. La référence t désigne le temps.

A un instant t0, l'organe de gestion OG envoie un premier entête de trame conditionnelle à un organe esclave OEj (par exemple OE1), pour qu'il la complète avec un premier segment de son message de réponse requis par un organe OE'k du second réseau R2 (par exemple un outil de diagnostic OE'1). Puis, à un instant t1 l'organe de gestion OG transmet immédiatement cette première trame conditionnelle complétée sur le second réseau R2, après l'avoir recopiée au format de ce dernier (R2).

A un instant t2, consécutivement à la réception d'une notification signalant l'émission de la première trame conditionnelle complétée, l'organe de gestion OG envoie un deuxième entête de trame conditionnelle à l'organe esclave OE1, pour qu'il la complète avec un deuxième segment de son message de réponse requis par l'outil de diagnostic OE'1. Cet instant t2 a été choisi afin qu'il corresponde à une tranche temporelle d'émission de l'organe esclave OE1 qui respecte la durée minimale dm du second réseau R2. Puis, à un instant t3 l'organe de gestion OG transmet immédiatement la deuxième trame conditionnelle complétée sur le second réseau R2, après l'avoir recopiée au format de ce dernier (R2).

A un instant t4, consécutivement à la réception d'une nouvelle notification signalant l'émission de la deuxième trame conditionnelle complétée, l'organe de gestion OG envoie un troisième entête de trame conditionnelle à l'organe esclave OE1, pour qu'il la complète avec un troisième segment de son message de réponse requis par l'outil de diagnostic OE'1. Cet instant t4 a été choisi afin qu'il corresponde à une tranche temporelle d'émission de l'organe esclave OE1 qui respecte la durée minimale dm du second réseau R2. Puis, à un instant t5 l'organe de gestion OG transmet immédiatement la troisième trame conditionnelle complétée sur le second réseau R2, après l'avoir recopiée au format de ce dernier (R2).

A un instant t6, consécutivement à la réception d'une nouvelle notification signalant l'émission de la troisième trame conditionnelle complétée, l'organe de gestion OG envoie un quatrième entête de trame conditionnelle à l'organe esclave OE1, pour qu'il la complète avec un quatrième segment de son message de réponse requis par l'outil de diagnostic OE'1. Cet instant t6 a été choisi afin qu'il corresponde à une tranche temporelle d'émission de l'organe esclave OE1 qui respecte la durée minimale dm du second réseau R2. Puis, à un instant t7 l'organe de gestion OG transmet immédiatement la quatrième trame conditionnelle complétée sur le second réseau R2, après l'avoir recopiée au format de ce dernier (R2).

A un instant t8, consécutivement à la réception d'une nouvelle notification signalant l'émission de la quatrième trame conditionnelle complétée, l'organe de gestion OG envoie un cinquième entête de trame conditionnelle à l'organe esclave OE1, pour qu'il la complète avec un cinquième segment de son message de réponse requis par l'outil de diagnostic OE'1. Cet instant t8 a été choisi afin qu'il corresponde à une tranche temporelle d'émission de l'organe esclave OE1 qui respecte la durée minimale dm du second réseau R2. Puis, à un instant t9 l'organe de gestion OG transmet immédiatement la cinquième trame conditionnelle complétée sur le second réseau R2, après l'avoir recopiée au format de ce dernier (R2).

L'invention offre plusieurs avantages, parmi lesquels :
- la garantie du respect de la durée minimale inter-trames sur le second réseau,
- l'affranchissement d'utilisation d'une mémoire tampon,
- l'optimisation du temps de transfert d'une réponse à une requête, du fait que le temps de récupération de la réponse depuis le premier réseau (LIN) est transparent vue du second réseau.

## Revendications

1. Procédé de contrôle de la transmission de messages de réponse, générés par au moins un organe esclave (OEj) appartenant à un premier réseau de communication (R1) multiplexé, de type LIN et géré par un organe de gestion (OG), à un second réseau de communication (R2) multiplexé et ne pouvant recevoir des trames résultant d'une segmentation d'un message de réponse que lorsqu'elles sont séparées par une durée minimale, **caractérisé en ce qu'**il comprend une étape dans laquelle, chaque fois qu'un organe esclave (OEj) doit transmettre un segment d'un message de réponse, ledit organe de gestion (OG) lui transmet à un instant choisi un entête d'une trame dite conditionnelle pour qu'il la complète avec ce segment et lui transmette une trame conditionnelle complétée pendant une tranche temporelle qui lui est dédiée et qui permet de respecter ladite durée minimale, puis ledit organe de gestion (OG) transmet immédiatement audit second réseau de communication (R2) cette trame conditionnelle complétée, et ainsi de suite jusqu'à ce que tous les segments dudit message de réponse aient été transmis audit second réseau de communication (R2) dans des trames conditionnelles complétées successives.

2. Procédé selon la revendication 1, **caractérisé en ce que** ledit organe de gestion (OG) envoie audit organe esclave (OEj) un nouvel entête de trame conditionnelle après qu'il ait reçu dudit second réseau de communication (R2) une notification signalant l'émission de la trame conditionnelle complétée précédente.

3. Procédé selon l'une des revendications 1 et 2, **caractérisé en ce que** ledit second réseau de communication (R2) est de type CAN.

4. Dispositif (D) de contrôle de la transmission de messages de réponse, générés par au moins un organe esclave (OEj) appartenant à un premier réseau de communication (R1) multiplexé, de type LIN et géré par un organe de gestion (OG), à un second réseau de communication (R2) multiplexé et ne pouvant recevoir des trames résultant d'une segmentation d'un message de réponse que lorsqu'elles sont séparées par une durée minimale, **caractérisé en ce qu'**il est agencé, chaque fois qu'un organe esclave (OEj) doit transmettre un segment d'un message de réponse, pour déclencher la transmission à un instant choisi par ledit organe de gestion (OG), à cet organe esclave (OEj), d'un entête d'une trame dite conditionnelle pour qu'il la complète avec ce segment et lui transmette une trame conditionnelle complétée pendant une tranche temporelle qui lui est dédiée et qui permet de respecter ladite durée minimale, puis pour déclencher la transmission immédiate par ledit organe de gestion (OG) audit second réseau de communication (R2) de ladite trame conditionnelle complétée, et ainsi de suite jusqu'à ce que tous les segments dudit message de réponse aient été transmis audit second réseau de communication (R2) dans des trames conditionnelles complétées successives.

5. Dispositif selon la revendication 4, **caractérisé en ce qu'**il est agencé pour déclencher l'envoi par ledit organe de gestion (OG) audit organe esclave (OEj) d'un nouvel entête de trame conditionnelle en cas de réception par ledit organe de gestion (OG) dudit second réseau de communication (R2) d'une notification signalant l'émission de la trame conditionnelle complétée précédente.

6. Dispositif selon l'une des revendications 4 et 5, **caractérisé en ce qu'**il est agencé pour déclencher la transmission de trames conditionnelles complétées à un second réseau de communication (R2) de type CAN.

7. Organe (OM) propre, d'une part, à gérer un premier réseau de communication (R1) multiplexé, de type LIN et auquel est connecté au moins un organe esclave (OEj), et, d'autre part, à être connecté à un second réseau de communication (R2) multiplexé et ne pouvant recevoir des trames résultant d'une segmentation d'un message de réponse que lorsqu'elles sont séparées par une durée minimale, **caractérisé en ce qu'**il comprend un dispositif de contrôle (D) selon l'une des revendications 4 à 6.

8. Organe selon la revendication 7, **caractérisé en ce qu'**il est propre à être connecté à un second réseau de communication (R2) de type CAN.

9. Véhicule comprenant un premier réseau de communication (R1) multiplexé, de type LIN et auquel est connecté au moins un organe esclave (OEj), et un second réseau de communication (R2) multiplexé et ne pouvant recevoir des trames résultant d'une segmentation d'un message de réponse que lorsqu'elles sont séparées par une durée minimale, **caractérisé en ce qu'**il comprend un organe de gestion (OG) selon l'une des revendications 7 et 8, propre à gérer ledit premier réseau de communication (R1) et à être connecté audit second réseau de communication (R2).

10. Véhicule selon la revendication 9, **caractérisé en ce qu'**il est de type automobile.

## Patentansprüche

1. Verfahren zur Steuerung der Übertragung von Antwortnachrichten, welche von mindestens einer Slave-Vorrichtung (OEj) generiert werden, die zu einem ersten Kommunikationsnetz (R1) vom Typ LIN gehört, das multiplexiert ist und von einer Steuervorrichtung (OG) gesteuert wird, zu einem zweiten Kommunikationsnetz (R2), das multiplexiert ist und keine Rahmen empfangen kann, die aus einer Segmentierung einer Antwortnachricht resultieren, wenn sie durch eine minimale Dauer getrennt sind, **dadurch gekennzeichnet, dass** dieses einen Schritt umfasst, in dem, jedes Mal wenn eine Slave-Vorrichtung (OEj) ein Segment einer Antwortnachricht übertragen muss, die Steuervorrichtung (OG) zu dieser in einem ausgewählten Moment einen Kopfteil eines als bedingt bezeichneten Rahmens überträgt, damit ihn diese mit diesem Segment vervollständigt und zu ihr einen vervollständigten bedingten Rahmen während eines Zeitschlitzes überträgt, der für sie dediziert ist und der es ermöglicht, die minimale Dauer einzuhalten, wobei die Steuervorrichtung (OG) anschließend diesen vervollständigten bedingten Rahmen unmittelbar zu dem zweiten Kommunikationsnetz (R2) überträgt, und so nacheinander, bis alle Segmente der Antwortnachricht zu dem zweiten Kommunikationsnetz (R2) in diesen sukzessiven vervollständigten bedingten Rahmen übertragen worden sind.

2. Verfahren nach Anspruch 1, **dadurch gekennzeichnet, dass** die Steuervorrichtung (OG) an die Slave-Vorrichtung (OEj) einen neuen Kopfteil eines bedingten Rahmens sendet, nachdem sie von dem zweiten Kommunikationsnetz (R2) eine Benachrichtigung empfangen hat, welche die Emission des vorhergehenden vervollständigten bedingten Rahmens signalisiert.

3. Verfahren nach einem der Ansprüche 1 und 2, **dadurch gekennzeichnet, dass** das zweite Kommunikationsnetz (R2) vom Typ CAN ist.

4. Vorrichtung (D) zur Steuerung der Übertragung von Antwortnachrichten, welche von mindestens einer Slave-Vorrichtung (OEj) generiert werden, die zu einem ersten Kommunikationsnetz (R1) vom Typ LIN gehört, das multiplexiert ist und von einer Steuervorrichtung (OG) gesteuert wird, zu einem zweiten Kommunikationsnetz (R2), das multiplexiert ist und keine Rahmen empfangen kann, die aus einer Segmentierung einer Antwortnachricht resultieren, wenn sie durch eine minimale Dauer getrennt sind, **dadurch gekennzeichnet, dass** diese ausgelegt ist, jedes Mal wenn eine Slave-Vorrichtung (OEj) ein Segment einer Antwortnachricht übertragen muss, in einem ausgewählten Moment durch die Steuervorrichtung (OG) die Übertragung eines Kopfteils eines als bedingt bezeichneten Rahmens an diese Slave-Vorrichtung auszulösen, damit ihn diese mit diesem Segment vervollständigt und zu ihr einen vervollständigten bedingten Rahmen während eines Zeitschlitzes überträgt, der für sie dediziert ist und der es ermöglicht, die minimale Dauer einzuhalten, anschließend durch die Steuervorrichtung (OG) die unmittelbare Übertragung des vervollständigten bedingten Rahmens zu dem zweiten Kommunikationsnetz (R2) auszulösen, und so nacheinander, bis alle Segmente der Antwortnachricht zu dem zweiten Kommunikationsnetz (R2) in diesen sukzessiven vervollständigten bedingten Rahmen übertragen worden sind.

5. Vorrichtung nach Anspruch 4, **dadurch gekennzeichnet, dass** diese ausgelegt ist, durch die Steuervorrichtung (OG) das Senden eines neuen Kopfteils eines bedingten Rahmens an die Slave-Vorrichtung (OEj) auszulösen, wenn von der Steuervorrichtung (OG) des zweiten Kommunikationsnetzes (R2) eine Benachrichtigung empfangen worden ist, welche die Emission des vorhergehenden vervollständigten bedingten Rahmens signalisiert.

6. Vorrichtung nach einem der Ansprüche 4 und 5, **dadurch gekennzeichnet, dass** diese ausgelegt ist, die Übertragung von vervollständigten bedingten Rahmen zu einem zweiten Kommunikationsnetz (R2) vom Typ CAN auszulösen.

7. Vorrichtung (OM), welche geeignet ist, einerseits ein erstes Kommunikationsnetz (R1) vom Typ LIN zu steuern, das multiplexiert ist und mit dem mindestens eine Slave-Vorrichtung (OEj) verbunden ist, und andererseits mit einem zweiten Kommunikationsnetz (R2) verbunden zu werden, das multiplexiert ist und keine Rahmen empfangen kann, die aus einer Segmentierung einer Antwortnachricht resultieren, wenn sie durch eine minimale Dauer getrennt sind, **dadurch gekennzeichnet, dass** diese eine Steuervorrichtung (D) nach einem der Ansprüche 4 bis 6 umfasst.

8. Vorrichtung nach Anspruch 7, **dadurch gekennzeichnet, dass** diese geeignet ist, mit einem zweiten Kommunikationsnetz (R2) vom Typ CAN verbunden zu werden.

9. Fahrzeug, umfassend ein erstes Kommunikationsnetz (R1) vom Typ LIN, das multiplexiert ist und mit dem mindestens eine Slave-Vorrichtung (OEj) verbunden ist, und ein zweites Kommunikationsnetz (R2), das multiplexiert ist und keine Rahmen empfangen kann, die aus einer Segmentierung einer Antwortnachricht resultieren, wenn sie durch eine minimale Dauer getrennt sind, **dadurch gekennzeichnet, dass** dieses eine Steuervorrichtung (OG) nach einem der Ansprüche 7 und 8 umfasst, die geeignet ist, das erste Kommunikationsnetz (R1) zu steuern und mit dem zweiten Kommunikationsnetz (R2) verbunden zu werden.

10. Fahrzeug nach Anspruch 9, **dadurch gekennzeichnet, dass** dieses vom Typ eines Automobils ist.

## Claims

1. A method for controlling the transmission of response messages, generated by at least one slave device (OEj) belonging to a first multiplexed communication network (R1) of the LIN type and managed by a management device (OG), to a second multiplexed communication network (R2) and only being able to receive frames resulting from a segmentation of a response message when they are separated by a minimum duration, **characterized in that** it includes a step in which, each time a slave device (OEj) has to transmit a segment of a response message, said management device (OG) transmits to it at a selected instant a leader of a frame, designated conditional, so that it completes it with this segment and transmits to it a completed conditional frame during a time slot dedicated thereto, and which allows said minimum duration to be observed, then said management device (OG) transmits immediately to said second communication network (R2) this completed conditional frame, and so on until all the segments of said response message have been transmitted to said second communication network (R2) in successive completed conditional frames.

2. The method according to Claim 1, **characterized in that** said management device (OG) sends to said slave device (OEj) a new conditional frame header after it has received from said second communication network (R2) a notification signalling the emission of the preceding completed conditional frame.

3. The method according to one of Claims 1 and 2, **characterized in that** said second communication network (R2) is of the CAN type.

4. A device (D) for controlling the transmission of response messages, generated by at least one slave device (OEj) belonging to a first multiplexed communication network (R1), of the LIN type and managed by a management device (OG), to a second multiplexed communication network (R2) only able to be receive frames resulting from a segmentation of a response message when they are separated by a minimum duration, **characterized in that** it is arranged, each time a slave device (OEj) has to transmit a segment of a response message, so as to trigger at an instant selected by said management device (OG), the transmission to this slave device (OEj) of a header of a frame, designated conditional, so that it completes it with this segment and transmits to it a completed conditional frame during a time slot which is dedicated thereto and which allows said minimum duration to be observed, then to trigger the immediate transmission by said management device (OG) to said second communication network (R2) of said completed conditional frame, and so on until all the segments of said response message have been transmitted to said second communication network (R2) in successive completed conditional frames.

5. The device according to Claim 4, **characterized in that** it is arranged so as to trigger the dispatch by said management device (OG) to said slave device (OEj) of a new conditional frame header in the case of reception by said management device (OG) of said second communication network (R2) of a notification signalling the emission of the preceding completed conditional frame.

6. The device according to one of Claims 4 and 5, **characterized in that** it is arranged so as to trigger the transmission of completed conditional frames to a second communication network (R2) of the CAN type.

7. A device (OM) suited, on the one hand, to manage a first multiplexed communication network (R1), of the LIN type, and to which at least one slave device (OEj) is connected, and, on the other hand, to be connected to a second multiplexed communication network (R2), only being able to receive frames resulting from a segmentation of a response message when they are separated by a minimum duration, **characterized in that** it includes a control device (D) according to one of Claims 4 to 6.

8. The device according to Claim 7, **characterized in that** it is suited to be connected to a second communication network (R2) of the CAN type.

9. A vehicle including a first multiplexed communication network (R1), of the LIN type and to which at least one slave device (OEj) is connected, and a second multiplexed communication network (R2) only able to receive frames resulting from a segmentation of a response message when they are separated by a minimum duration, **characterized in that** it includes a management device (OG) according to one of Claims 7 and 8, suited to manage said first communication network (R1) and to be connected to said second communication network (R2).

10. The vehicle according to Claim 9, **characterized in that** it is of the automobile type.
